# EUROPEAN PATENT SPECIFICATION

(11) **EP 1 920 483 B1**
(45) Date of publication and mention of the grant of the patent: **12.08.2009**
(21) Application number: 06798578.8
(22) Date of filing: 29.08.2006
(51) Int. Cl.: H01M 2/34, H01M 10/48

(54) **CELL HAVING IRREVERSIBLE HEAT SENSOR**
ZELLE MIT IRREVERSIBLEM FÜHLER
ACCUMULATEUR DOTE D'UN DETECTEUR DE TEMPERATURE IRREVERSIBLE

(30) Priority: 30.08.2005 KR 20050080008
(43) Date of publication of application: 14.05.2008
(73) Proprietor: LG Chem, Ltd., Seoul 150-721 (KR)
(72) Inventor: MOON, Jeong-O, Seoul 136-071 (KR); YOON, Seog-Jin, LG Chem Research Park Patent, Yuseong-gu, Daejeon 305-380 (KR); JUNG, Soon-Kwang, Yongdu-dong, Dongdaemun-gun, Seoul 130-723 (KR)
(74) Representative: Cabinet Plasseraud
(86) International application number: PCT/KR2006/003410
(87) International publication number: WO 2007/027046

(56) References cited:
- JP-A- 11 025 938
- JP-A- 2000 003 734
- US-A- 4 572 878
- US-A- 5 592 070

## Description

### Technical Field

The present invention relates to a battery having a heat sensor, and more particularly, to a battery having an irreversible heat sensor, capable of indicating temperature variation of two or more levels, preferably three or more levels. The heat sensor of the present invention is subjected to variation of indication of two or more levels according to temperature, but it does not allow the varied indication to return to an original state although the temperature returns to an original state. As a result, it is possible to easily check the history of heat impact of the battery having the heat sensor.

### Background Art

Nowadays, various batteries are broadly used in various electronic goods, and thus ordinary consumers short of acknowledge about the battery are required to recognize a danger of the battery. Especially, when a battery, having been exposed to unsafe conditions at least one time, continues to be used, the danger increases in proportion to a use period of time. In connection with safety, danger, and the like, it is necessary to know the history about whether the battery that is currently in use has ever been exposed to unsafe conditions or not.

The battery has various dangerous factors such as overcharge, overdischarge, overheat, and so on. Among them, the overheat of the battery is directly involved with the safety of the battery itself, particularly with explosion or inflammation.

In the field of the battery, especially in a secondary battery, more especially in a lithium-ion battery, it is very important to secure heat safety of the battery. When the temperature of the secondary battery increases, and thus the secondary battery is subjected to heat impact, this has an adverse influence on an electrolyte, electrodes, etc., which constitute the battery. As a result, there is a possibility of an impediment to performance of the battery being caused. In some cases, bad or wrong operation of a protection circuit, a device for protecting the battery, may be caused. Hence, even though it is possible to use the battery that underwent the heat impact, the battery may be regarded to have a serious safety problem. Further, this unsafe battery may be regarded as having high danger of explosion or inflammation.

As such, although the battery can be currently used, it is very important in the aspect of performance and safety of the battery to check whether the battery has been subjected to a shock of heat, i.e. a heat impact, in the past. Further, the heat impact history of the battery is closely relevant to a lifespan of the battery.

Conventional methods for checking temperature variation of the battery are as follows.

As an example, a battery pack having a means for indicating internal temperature of the battery is disclosed in Japanese Unexamined Patent Publication No. 1995-014562.

Further, a battery having a temperature indication means to show an operation temperature thereof is disclosed in Japanese Unexamined Patent Publication No. 19955-320709, in which a user's attention can be invited by informing the operation temperature of the battery. For example, a sign "optimal state" is given at room temperature, and another sign "reduction of lifespan" is given at low temperature. Thereby, the user of the battery can be reminded to pay attention to the battery.

However, all of the conventional temperature indication means are reversible indication means. Hence, when the temperature returns to an original state again, the indication of the temperature indication means returns to an original state. Accordingly, it is impossible to check the heat impact history of the battery.

Meanwhile, a battery having an irreversible temperature detector is disclosed in Korean Patent Application Publication No. 2000-06684. However, a temperature detector whose color is changed at a specific temperature is employed to the battery, so that it is impossible to check the heat impact history according to temperature.

In this manner, the conventional solutions are not easy to check the heat impact history at various temperatures.

### Disclosure of the Invention

For this reason, the inventors of the present invention have studied a method capable of easily checking the heat impact history of the battery, as a barometer of safety or danger of the battery. As a result, they have discovered that the heat impact history of the battery could be easily checked by providing the battery with an irreversible heat sensor, particularly, capable of indicating temperature variation of two or more levels.

Therefore, it is an objective of the present invention to provide a battery capable of easily displaying a heat impact history.

It is another objective of the present invention to provide a battery having an irreversible heat senor.

According to an aspect of the present invention, there is provided a battery having an irreversible heat sensor, capable of indicating temperature variation of two or more levels.

The irreversible heat sensor of the present invention is subjected to variation of indication when temperature is varied, and then maintains the varied indication although the varied temperature returns to an original states. The irreversible heat sensor has indication variation of two or more levels, namely indicated at two or more different temperatures. As a result, when the irreversible heat senor is used, the heat impact history of the temperature variation of two or more levels can be checked. If necessary, an irreversible heat senor subjected to variation of indication at three or more different temperatures is used. Thereby, the heat impact history of the temperature variation of three or more levels can be checked.

The irreversible heat sensor can be usefully applied to a rechargeable secondary battery, especially a lithium-ion secondary battery.

Herein, a heat sensor refers to a means capable of detect and indicate variation of heat or temperature. For example, the heat sensor may be produced from a substance whose color varies depending on temperature in order to indicate the temperature variation. In other words, a heat sensor that expresses variation of temperature through variation of color depending on temperature can be used in the present invention. An example of the heat sensor includes a thermocouple. Preferably, the heat sensor produced from the substance whose color varies depending on temperature may be easily applied to the battery according to the present invention.

The heat sensor of the present invention is irreversible with respect to the indication of the temperature variation. That is, the heat sensor varies indication at a specific temperature, and then it does not recover from the varied indication although the temperature returns to its original state. Further, the heat sensor has the indication variation of two or more levels. In other words, the heat sensor can indicate the temperature variation of two or more levels, wherein the indication is varied at two or more different temperatures, the indication after variation is distinguished from that before variation, and although the temperature is recovered, the indication after variation does not return to that before variation again. Herein, this heat sensor is referred to as an "irreversible heat sensor capable of indicating temperature variation of two or more levels." More preferably, the heat sensor is an irreversible heat sensor capable of indicating temperature variation of three or more levels, thereby checking heat impact history in greater detail.

Examples of the heat sensor include, but are not limited thereto, a thermal paper, a temperature sensible crayon, a temperature sensible manicure, and the like.

According to an aspect of the present invention, the heat sensor produced from a temperature sensitive paint, for example a temperature sensitive ink, preferably an irreversible temperature sensitive ink, a color of which varies at a specific temperature, can be used. For example, the heat sensor produced by applying the temperature sensitive paint to a substrate can be used.

Herein, the temperature sensitive paint is a paint produced by use of a compound whose color varies at a given temperature, and thus enables a user to recognize temperature variation. This temperature sensitive paint is also called a temperature measurement paint or a thermocolor. The temperature sensitive paint is sorted into a reversible temperature sensitive paint that changes its color by heating and returns to an original color upon cooling, and an irreversible temperature sensitive paint that changes its color by heating but fails to return to an original color upon cooling. In the present invention, the irreversible temperature sensitive paint is used. Therefore, according to an aspect of the present invention, there can be used an irreversible heat sensor formed by applying the irreversible temperature sensitive paint, a color of which varies depending on temperature, but the color once varied does not return to its original color again, to a substrate.

A range of the temperature in which the color of the temperature sensitive paint is changed can be adjusted if necessary. In the present invention, a temperature sensitive paint that changes its color within a temperature range from about 35 to 150°C can be used. A temperature at which a color of the temperature sensitive paint is varied is called a color-changing point. Generally, the conventional temperature sensitive paint has one color-changing point. Meanwhile, the present invention is adapted to allow the temperature sensitive paint to have two or more color-changing points, and thus check heat impact history of the battery through the heat sensor produced by use of this temperature sensitive paint.

The temperature sensitive paint changes its color by an optical change of a component compound, for example a change in a crystal structure, a change of pH, thermal decomposition of the components, a change in an electron number between an electron acceptor and donor, and so on.

Accordingly, as an example of the temperature sensitive paint, if the temperature sensitive paint has different crystal structures at two or more different temperatures, the temperature sensitive paint may change its color at least two times.

As another example of the temperature sensitive paint, if two or more components having different thermal decomposition temperatures are mixed in the temperature sensitive paint, the thermal decomposition occurs at two or more different temperatures. As a result, the temperature sensitive paint may change its color at two or more different temperatures.

The electron number between the electron acceptor and donor or the crystal structure are changed at two or more different temperatures, the temperature sensitive paint may also change its color at two or more different temperatures.

For example, if the temperature sensitive paint changes its color at two different temperatures, it has two color-changing points, and the temperature sensitive paint has total three colors; one before color change, one after first color change, and one after second color change. In the case of using this temperature sensitive paint, the heat sensor having irreversible variation of indication of two levels can be produced.

In addition, the temperature sensitive paint whose color tone varies depending on temperature can be used. For example, when the heat sensor is produced by use of the temperature sensitive paints whose color becomes strong or weak as temperature becomes high, the heat impact history can be checked by comparing the color tones. In order to compare the color tones, a reference sample showing temperatures according to the color tone is provided. Thereby, the color tone and history of temperature variation of the heat sensor can be checked, so that the heat impact history of the battery can be checked.

A method of producing the heat sensor using the temperature sensitive paint includes a method of applying the temperature sensitive paint onto a substrate for the heat sensor. Any application can be used. For example, coating or printing may be used.

As the substrate for the heat sensor, any substrate will do as long as the temperature sensitive paint can be attached to the substrate. Accordingly, a paper, fabric, plastic, glass, metal, etc., can be used.

The irreversible heat senor can be formed by disposing two or more different temperature sensitive paints in parallel. For example, as a method of producing the temperature sensitive paint having two or more color-changing points, two or more temperature sensitive paints each having a single color-changing point respectively may be disposed in parallel. In order to use two or more temperature sensitive paints each having a single color-changing point in parallel, a heat sensor substrate, for example a paper or plastic substrate, is divided into two or more areas, and then each area is applied with each temperature sensitive paint. Thereby, the heat sensor is produced.

Meanwhile, a mixture of two or more temperature sensitive paints, each of which having a single color-changing point, can be used.

When the mixture of two or more temperature sensitive paints is used, there is no limitation as long as no chemical reaction is generated while the two or more temperature sensitive paints are mixed. Considering that each of the temperature sensitive paints changes its color by a change in a crystal structure, a change of pH, thermal decomposition of temperature sensitive paint components, a change in an electron number between an electron acceptor and donor, and so on, because each of the temperature sensitive paints can influence the color change of the other temperature sensitive paint by mixing, color-changing point of the mixed temperature sensitive paint may be different from each color-changing point of the individual temperature sensitive paint before mixing. Accordingly, when the temperature sensitive paints are mixed, it is necessary to check the color-changing point of the mixed temperature sensitive paint before applying it.

Meanwhile, in order to prepare a temperature sensitive paint, two or more temperature sensitive pigments can be combined, thereby obtaining a different color. Further, a temperature sensitive pigment and an ordinary pigment are combined, thereby obtaining a different color.

For example, when the temperature sensitive pigment and the ordinary pigment are mixed, it is possible that a mixed color is developed when temperature is not raised, and it is also possible that a color of the temperature sensitive pigment disappears and only a color of the ordinary pigment is developed when temperature is raised.

Further, three temperature sensitive pigments between which a temperature difference exists are combined, thereby producing another result. For example, when the temperature sensitive pigments having color-changing points of 40°C, 70°C, and 100°C are combined, it is possible that they are allowed to change a color at a temperature of about 60°C, to change another color at a temperature of about 80°C, and to change yet another color at a temperature of about 100°C.

In addition, if necessary, a mixture of the temperature sensitive pigments having various colors or changing its color at various temperatures can be prepared.

In general, the temperature sensitive pigment has a lifespan of about 2 years. Hence, after 2 years, the heat sensor is adapted to be replaced by a new one.

The temperature sensitive pigment available on the market can be used. Further, a mixture of temperature sensitive pigments available on the market can be used.

Meanwhile, the temperature sensitive pigment, a color tone of which varies depending on temperature, available on the market can be also used. For example, this temperature sensitive pigment includes a product whose color is changed into the darkest color at a temperature of about 36°C, into a bright color when temperature is varied, and into the brightest color at a temperature of about 60°C.

For reference, another example capable of detecting temperature includes a thermal fuse. The thermal fuse shows no indication when it is influenced under an operating temperature. As a result, even though heat impact occurring under an operating temperature of the thermal fuse may influence safety of the battery, the thermal fuse shows no indication with respect to such heat impact. Hence, there is a possibility of using the battery again under the situation where the battery may be damaged.

On the contrary, in the present invention, the heat sensor, the irreversible temperature detector, undergoing variation of indication of two or more levels, or three or more levels if necessary, according to temperature is employed to the battery. A consumer observes a change of the heat sensor to directly checking whether the battery is subjected to heat impact or not, so that it is possible to prevent safety hazards related to the battery in advance.

The heat sensor of the present invention can irreversibly indicate temperature variation of two or more levels, so that history of the heat impact of two or more levels can be checked. For example, it can be easily determined whether or not the battery is subjected to the heat impact only under a temperature having no problem on the use of the battery, or at high temperature capable of influencing the lifespan or safety of the battery.

The method of indicating the temperature variation of the heat sensor and the temperature causing the variation of indication of the heat sensor can be arbitrarily adjusted by a person of ordinary skill in the art if necessary. For example, in the case of the heat sensor whose color varies depending on temperature, the color-changing temperature of the heat sensor can be adjusted so as to change a color at a maximum operating temperature, a critical tolerance temperature, or a temperature causing explosion and inflammation of the battery. This temperature has a different reference value according to a customer or a producer. In the case of an ordinary secondary battery, the maximum operating temperature of the battery is generally set to about 60°C, and the critical tolerance temperature of explosion and inflammation of the battery is generally set to a temperature range from about 120°C to 150°C. The heat sensors of the present invention can be made by a person of ordinary skill in the art, or purchased on the market.

For example, the maximum operating temperature of the ordinary lithium-ion secondary battery is set to about 60°C. Thus, the secondary battery is preferably used at a temperature of 60°C or less.

Further, when the temperature of the battery exceeds 60°C and reaches 80°C or more, the safety of the battery may be problematic. In other words, at high temperature of 80°C or more, the battery is swollen or generates high-pressure gases due to chemical reaction in the battery. In addition, there is a possibility of leakage of an electrolyte, venting, or explosion. When the temperature of the battery is raised, an initial phenomenon occurring at the battery is swelling of the battery. This is because the electrolyte used in the lithium-ion secondary battery is decomposed at a temperature ranging from about 80°C to 90°C, and thereby increasing internal pressure of the lithium-ion secondary battery.

Meanwhile, when the temperature of the lithium-ion secondary battery continues to be raised, a separator (e.g. of PP, poly ethylene, etc.) used in the lithium-ion secondary battery is deformed at a temperature ranging from about 120°C to 130°C, and thereby causing an internal short to inflame the lithium-ion secondary battery.

For this reason, when the battery is experienced with a heat impact of 80°C or more, it is preferable not to use the battery even if it is possible to use the battery. When the battery is experienced with a heat impact of 120°C or more, it is preferable to discard the battery. In this manner, if the heat impact history of the battery according to temperature can be checked, it is helpful to determine whether or not the battery is influenced by heat, so that the battery can be used with higher safety.

According to an aspect of the present invention, the indication of the heat sensor may be adapted to be varied near the maximum operating temperature, the critical tolerance temperature, or the temperature causing explosion and inflammation of the battery, which can be determined in consideration of operation condition, consumer's need or production condition. In consideration of the above temperature, it is possible to prepare the heat sensor satisfying the following conditions that first color change occurs when the maximum operating temperature of the battery is exceeded, and second color change occurs when the critical tolerance temperature of the battery is exceeded. Thereby, the battery can be treated differently according to the color change. If necessary, it is possible that the indication of the heat sensor is changed once more at a predetermined temperature lower than the temperature at which the battery has a high possibility of explosion and inflammation, so that the heat sensor can cause third color change.

According to an aspect of the present invention, a heat sensor, of which the indication changes first time at a temperature ranging from 55°C to 65°C on the basis of 60°C, an ordinary allowable operating temperature of the battery, and changes second time at a temperature ranging from 75°C to 85°C on the basis of 80°C, an allowable safe temperature of the battery, is used.

According to another aspect of the present invention, a heat sensor, of which the indication changes first time at a temperature ranging from 55°C to 65°C on the basis of 60°C, second time at a temperature ranging from 75°C to 85°C on the basis of 80°C, and third time at a temperature ranging from 95°C to 105°C on the basis of 100°C, which is a little lower than the temperature triggering explosion and inflammation of the battery, is used. The color of the heat sensor is dependent on a type of the heat sensor.

In the following embodiment of the present invention, the heat sensor is used, which shows a. white color at a temperature of 60°C or less, a blue color at a temperature ranging from 60°C to 80°C, a black color at a temperature ranging from 80°C to 100°C, and a red color at a temperature of 100°C or more.

In this case, if the heat sensor of the battery underwent first color change, it can be predicted that the battery can be currently used, but it leaves room for the possibility of generating a problem in the battery. Further, if the heat sensor of the battery underwent second color change, the battery has a high possibility of giving rise to a problem on an internal structure or safety, and thus it is preferable to prohibit its use. In addition, when the heat sensor capable of indicating temperature variation of three or more levels underwent third color change, the battery is in a state where its safety is very questionable, and thus it is preferable to stop its use and discard it. These measurements for safety can be added to a catalog of the battery or included in the warning words attached to the battery by a battery producer.

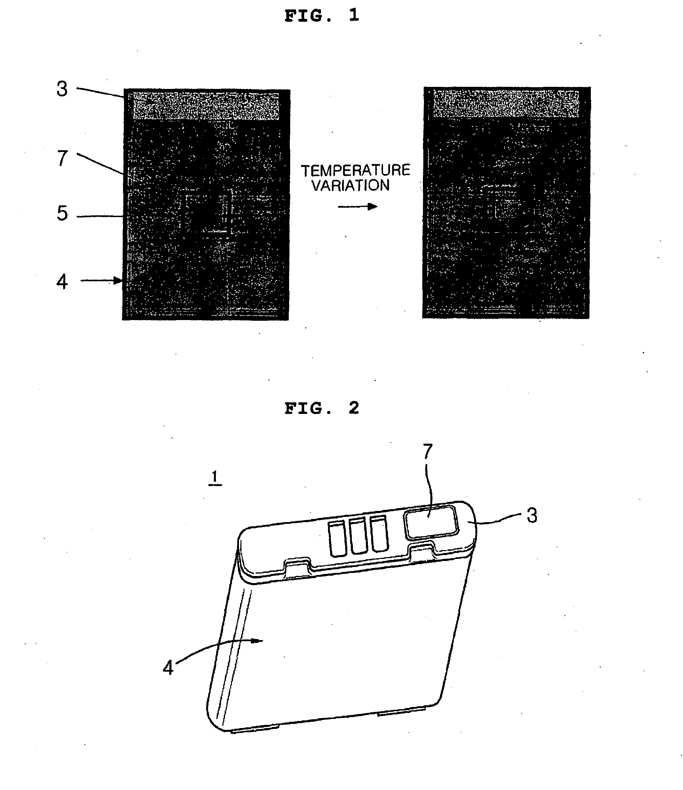

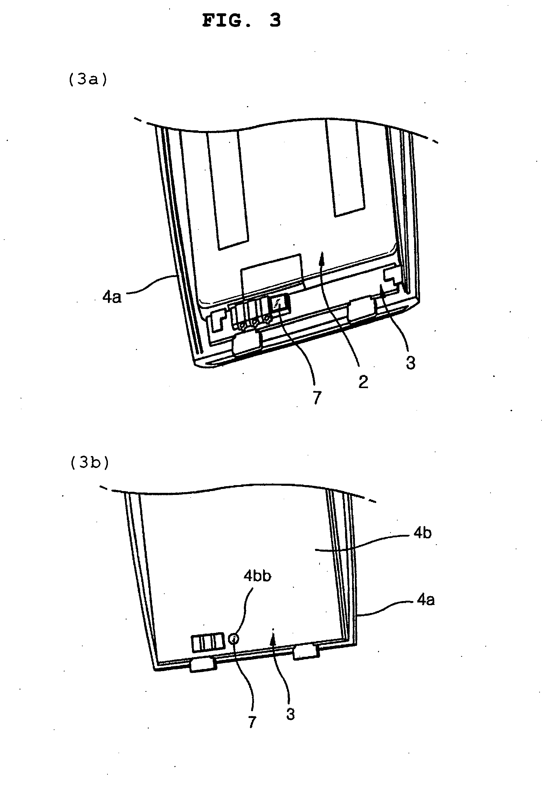

The heat sensor of the present invention is preferably disposed at the battery so as to be seen from the outside. The disposition method can be properly selected by a person of ordinary skill in the art. For example, there are a method of attaching the heat sensor to an external pack of the battery using an adhesive and packing it with a transparent material (FIG. 1), and a method of disposing the heat sensor in an inner portion of the battery, providing a hole to an external case, and allowing the heat sensor to be seen from the outside through the hole (FIGS. 3a and 3b), and so on.

The disposition of the heat sensor is not limited as long as the heat sensor can be seen from the outside and it is not separated while the battery is used.

Further, the heat sensor can be used together with a submersion label (A/S label) in the battery of the present invention. It is heat and water that can cause a problem in view of the use of the battery. In the case where the heat sensor is used for the battery together with the submersion label, when the battery has a functional problem, it is easily determined by which cause the functional problem occurs.

For example, if the battery has a malfunction and the color of the heat sensor has been varied, it can be assumed that the battery has been subjected to heat impact. If the submersion label is varied, it can be assumed that the battery has been into contact with water. Hence, when both the heat sensor and the submersion label are used, an impact or damage applied to the battery by heat and water can be simultaneously checked. The submersion label and the heat sensor can be integrally formed. For example, a temperature sensitive paint for the heat sensor is applied onto a part of a substrate formed of plastic or paper, and the submersion label is attached to the remaining part of the substrate. Thereby, both the submersion label and the heat sensor are disposed at the substrate, and then the substrate can be attached to the battery.

As an example of the submersion label, a material having a characteristic of discoloration or color bleeding due to water or a great deal of moisture can be used. For example, when a substrate applied with ink having solubility in water is used as the submersion label, this submersion label will be subjected to color bleeding when in contact with water. Meanwhile, when a substrate applied with ink discolored due to contact with water or a great deal of moisture is used as the submersion label, this submersion label will be subjected to discoloration when in contact with water. The discolored submersion label may include one where an ink color is changed into another color or is lost.

The submersion label available on the market can be used. Currently, the submersion labels where various colors of inks are applied onto various substrates are broadly put on the market.

The submersion label is also partially exposed so as to observe its color bleeding or discoloration from the outside. A method of disposing the submersion label at the battery also can be properly selected by a person of ordinary skill in the art. For example, there are a method of attaching the submersion label to an external pack of the battery using an adhesive, and a method of disposing the submersion label in an inner portion of the battery, providing a hole to an external case, and allowing the submersion label to be seen from the outside, and so on. Further, the submersion label may be integrally formed with a plastic molding so as to be disposed in the plastic molding when the plastic molding is formed.

For example, the submersion label is disposed at a component for producing the battery, for example, a battery cell, a protection circuit, etc., before the plastic molding is formed, and then plastic molding is carried out. In addition, the submersion label may be disposed in a mold assembly for molding a plastic case, and molding is carried after a structure of the mold assembly is adjusted so that a part of the submersion label can be exposed outside. Thereby, the submersion label can be disposed in the plastic molding used as the plastic case.

The method of disposing the submersion label is not limited as long as the submersion label can be seen from the outside and it is not separated while the battery is used.

### Advantageous Effect

According to the present invention, the battery is provided with the irreversible heat sensor capable of indicating temperature variation of two or more levels, or three or more levels if necessary, thereby easily allowing the history of heat impact of the battery to be checked. As a result, it is easy to determine usability and safety of the battery.

### Brief Description of the Drawings

The foregoing and other objects, features and advantages of the present invention will become more apparent from the following detailed description when taken in conjunction with the accompanying drawings in which:
FIG. 1 illustrates an embodiment where a heat sensor is attached in the middle of a body of a battery and a process where a color of the heat sensor is varied;
FIG. 2 illustrates an embodiment where a heat sensor is attached on an upper portion of a protection circuit;
FIG. 3a illustrates an embodiment where a heat sensor is disposed in an inner portion of a battery case;
FIG. 3b illustrates an embodiment where an external case is settled to the structure of FIG. 3a, wherein it can be observed through a hole 4bb whether or not the heat sensor change its color;
FIG. 4a illustrates an embodiment where a heat sensor and a submersion label are disposed together on an upper portion of a protection circuit of a battery; and
FIG. 4b illustrates an embodiment where a submersion label is disposed in a plastic molding for forming a protection circuit, and a heat sensor is attached on an upper portion of a protection circuit.

### <Brief Description of the indications>

| | |
|---|---|
| 1: battery | 2: battery cell |
| 3: protection circuit | 4: external case |
| 4a: body case | 4b: cover case |
| 4bb: hole | 5: transparent material |
| 7: heat sensor | |

### Best Mode for Carrying Out the Invention

Reference will now be made in detail to the exemplary embodiments of the present invention.

### <Embodiment>

In the embodiments of the present invention, a heat sensor is used, which shows a white color at a temperature ranging from 0°C to 60°C, a blue color at a temperature ranging from 60°C to 80°C, a black color at a temperature ranging from 80°C to 100°C, and a red color at a temperature of 100°C or more. In other words, the heat sensor gives rise to first color change at a temperature of about 60°C, and second color change at a temperature of about 80°C, and third color change at a temperature of about 100°C.

In this case, the color of the heat sensor is not changed at a temperature ranging from 0°C to 60°C (i.e. in a safe operating temperature range of a battery). Specifically, if the color of the heat sensor attached to the battery maintains a white color, it is recognized that the battery does not experience a heat impact that may cause a problem on safety of the battery.

In contrast, if the battery experiences heat impact at a temperature ranging from 60°C to 80°C, the heat sensor will show a blue color. After changed into the blue color, the heat sensor will not return to its original color, a white color, although the battery recovers room temperature. Therefore, if the heat sensor of the battery shows a blue color, it turns out that the battery had experienced the heat impact corresponding to the temperature ranging from 60°C to 80°C. In this case, it can be predicted that the battery can be currently used, but it leaves room for a possibility of a problem occurring in the battery. Hence, a battery producer can insert guide or warning words corresponding to this possibility into the battery, or add this possibility to a user's manual.

Further, if the battery experiences heat impact at a temperature ranging from 80°C to 100°C, the heat sensor will show a black color. After the heat sensor has changed to the black color, it will not return to a blue color or its original color, a white color, although the battery goes back to room temperature. Therefore, if the heat sensor of the battery shows the black color, it turns out that the battery had experienced the heat impact corresponding to the temperature of 80°C or more. In this case, because there is a high possibility of the battery causing a problem on an internal structure or safety, it is preferable to prohibit its use.

Meanwhile, if the battery experiences heat impact at a temperature of 100°C or more, the heat sensor will show a red color. After the heat sensor has changed to the red color, it will not return to a previous state or its original color, although the battery goes back to room temperature. Therefore, if the heat sensor of the battery shows the red color, it turns out that the battery had experienced the heat impact corresponding to the temperature of 100°C or more, and thus the safety of the battery itself is very questionable. In this case, it is preferable to immediately prohibit its use and discard it. Hence, a battery producer can insert guide or warning words corresponding to this possibility into the battery, or add this possibility to a user's manual.

FIG. 1 illustrates an embodiment where a heat sensor (7) is attached in the middle of a body of a battery and a process where a color of the heat sensor is varied. Here, the heat sensor is attached in the middle of the body of the battery, and then packed with a transparent material (5).

FIG. 2 illustrates an embodiment where a heat sensor (7) is attached on an upper portion of a protection circuit.

FIG. 3a illustrates an embodiment where a heat sensor (7) is disposed in an inner portion of a battery case, and FIG. 3b illustrates an embodiment where an external case (4b) is settled to the structure of FIG. 3a, wherein it can be observed through a hole (4bb) whether or not the heat sensor changes its color.

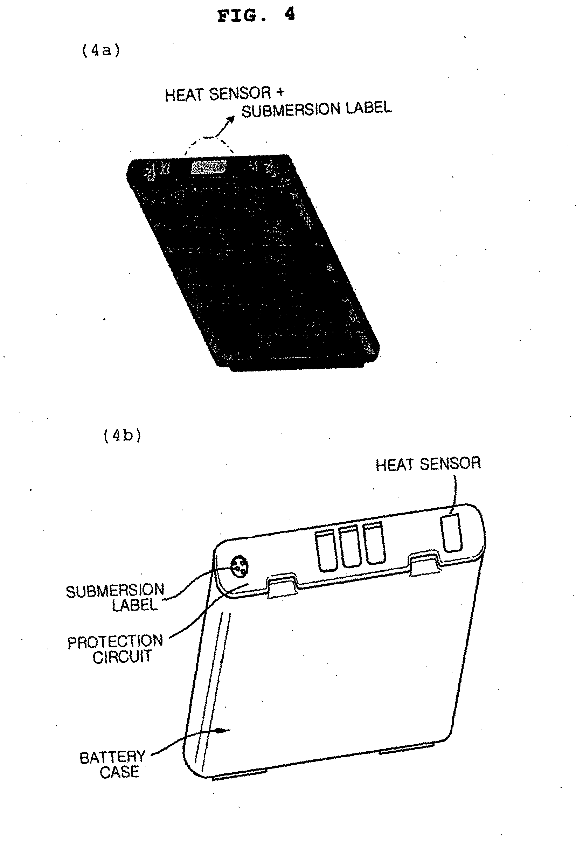

FIG. 4a illustrates an embodiment where a heat sensor and a submersion label are disposed together on an upper portion of a protection circuit of a battery.

FIG. 4b illustrates an embodiment where a submersion label is disposed in a plastic molding for forming a protection circuit, and a heat sensor is attached on an upper portion of a protection circuit. In the embodiment of FIG. 4b, constituent parts of the protection circuit are injection-molded together with the submersion label, and the result is combined with a battery cell. Thereby, the battery is produced.

More specifically, a safety element and connection terminals are first fixed to a board having a protection circuit thereon, and then the submersion label is disposed at a portion where the connection terminals are not located by using an adhesive. Then, the protection circuit having the submersion label disposed thereon is positioned in a molding cavity of a mold assembly independently with the battery cell, wherein a part of each of the connection terminals and a part of the submersion label are exposed outside. In this state, a melt resin is injected into the molding cavity of the mold assembly. Thereby, an injection molding of the protection circuit is formed.

The battery cell is prepared apart from the step of forming the injection molding of the protection circuit, and the connection terminals of the injection molding of the protection circuit and electrode terminals of the battery cell are connected. Thereby, the battery is completed. Then, the heat sensor is disposed on the upper portion of the protection circuit.

In FIGS. 1 to *4b, the methods capable of disposing the heat sensor on the battery are illustrative. Accordingly, the heat sensor or the heat sensor and the submersion label of the battery can be disposed at the position shown in the figures or in a way other than that described in the embodiment.

### Industrial Applicability

As can be seen from the foregoing, according to the present invention, the heat sensor is subjected to variation of indication of two or more levels according to temperature, but it does not allow the varied indication to return to an original state although temperature returns to an original state. As a result, it is possible to easily check the history of heat impact of the battery having the heat sensor. Therefore, the heat sensor can be usefully used as a safety mark of the battery.

While this invention has been described in connection with what is presently considered to be the most practical and exemplary embodiments, it is to be understood that the invention is not limited to the disclosed embodiment and the drawings, but, on the contrary, it is intended to cover various modifications and variations within the scope of the appended claims.

## Claims

1. A battery having an irreversible heat sensor capable of indicating temperature variation of two or more levels.

2. The battery according to claim 1, wherein the battery is a secondary battery.

3. The battery according to claim 1, wherein the temperature variation in the irreversible heat sensor is indicated by a change in color of the irreversible heat senor.

4. The battery according to claim 1, wherein the irreversible heat sensor is a thermal paper, a temperature sensible crayon, or a temperature sensible manicure.

5. The battery according to claim 1, wherein the irreversible heat sensor has variation of indication at a temperature ranging from 55°C to 65°C, and from 75°C to 85°C.

6. The battery according to claim 1, wherein the irreversible heat sensor indicates the temperature variation of three levels.

7. The battery according to claim 6, wherein the irreversible heat sensor has variation of indication at a temperature ranging from 55°C to 65°C, from 75°C to 85°C, and from 95°C to 105°C.

8. The battery according to claim 1, wherein the irreversible heat sensor is formed by applying to a substrate an irreversible sensitive paint where a color is varied depending on temperature but the varied color does not return to a previous color again.

9. The battery according to claim 8, wherein the temperature sensitive paint changes its color by any one of a change in a crystal structure, a change of pH, thermal decomposition of temperature sensitive paint components, and a change in an electron number between an electron acceptor and donor.

10. The battery according to claim 8, wherein the temperature sensitive paint changes its color at two or more different temperatures.

11. The battery according to claim 8, wherein the temperature sensitive paint has a color tone which varies depending on temperature.

12. The battery according to claim 8, wherein the irreversible heat sensor is formed by disposing two or more different temperature sensitive paints in parallel.

13. The battery according to claim 5, wherein the temperature sensitive paint is a mixture of two or more temperature sensitive paints, wherein each temperature sensitive paint has its own single color-changing point different from those of others.

14. The battery according to claim 1, further comprising a submersion label in addition to the irreversible heat sensor.

15. The battery according to claim 14, wherein the submersion label is disposed inside a plastic molding constituting the battery.

16. The battery according to claim 14, wherein the irreversible heat sensor and the submersion label are integrally formed.

17. The battery according to any one of claims 1 to 16, wherein the battery is a secondary battery.

18. The battery according to claim 17, wherein the secondary battery is a lithium-ion secondary battery.

## Patentansprüche

1. Batterie mit einem irreversiblen Wärmefühler, der Temperaturschwankung mit zwei oder mehr Niveaus anzeigen kann.

2. Batterie nach Anspruch 1, wobei die Batterie eine Sekundärbatterie ist.

3. Batterie nach Anspruch 1, wobei die Temperaturschwankung im irreversiblen Wärmefühler durch einen Farbumschlag des irreversiblen Wärmefühlers angezeigt wird.

4. Batterie nach Anspruch 1, wobei der irreversible Wärmefühler ein Thermopapier, ein temperaturempfindlicher Stift oder eine temperaturempfindliche Maniküre ist.

5. Batterie nach Anspruch 1, wobei der irreversible Wärmefühler eine Anzeigeschwankung bei einer Temperatur im Bereich von 55 °C bis 65 °C und von 75 °C bis 85 °C hat.

6. Batterie nach Anspruch 1, wobei der irreversible Wärmefühler die Temperaturschwankung mit drei Niveaus anzeigt.

7. Batterie nach Anspruch 6, wobei der irreversible Wärmefühler eine Anzeigeschwankung bei einer Temperatur im Bereich von 55 °C bis 65 °C, von 75 °C bis 85 °C und von 95 °C bis 105 °C hat.

8. Batterie nach Anspruch 1, wobei der irreversible Wärmefühler durch Auftragen eines irreversiblen empfindlichen Anstrichs auf ein Substrat gebildet ist, wobei eine Farbe temperaturabhängig variiert wird, aber die variierte Farbe nicht wieder eine vorherige Farbe annimmt.

9. Batterie nach Anspruch 8, wobei der temperaturempfindliche Anstrich seine Farbe durch Änderung einer Kristallstruktur, pH-Wertänderung, thermische Zersetzung temperaturempfindlicher Lackkomponenten oder Änderung einer Elektronenanzahl zwischen einem Elektronenakzeptor und -donator wechselt.

10. Batterie nach Anspruch 8, wobei der temperaturempfindliche Anstrich seine Farbe bei zwei oder mehr unterschiedlichen Temperaturen wechselt.

11. Batterie nach Anspruch 8, wobei der temperaturempfindliche Anstrich einen Farbton hat, der temperaturabhängig variiert.

12. Batterie nach Anspruch 8, wobei der irreversible Wärmefühler durch paralleles Anordnen von zwei oder mehr unterschiedlichen temperaturempfindlichen Anstrichen gebildet ist.

13. Batterie nach Anspruch 5, wobei der temperaturempfindliche Anstrich eine Mischung aus zwei oder mehr temperaturempfindlichen Anstrichen ist, wobei jeder temperaturempfindliche Anstrich seinen eigenen einzigen Farbumschlagpunkt hat, der sich von denen anderer unterscheidet.

14. Batterie nach Anspruch 1, ferner mit einer Eintauchen anzeigenden Markierung zusätzlich zum irreversiblen Wärmefühler.

15. Batterie nach Anspruch 14, wobei die Eintauchen anzeigende Markierung innerhalb eines die Batterie bildenden Kunststoff-Formteils angeordnet ist.

16. Batterie nach Anspruch 14, wobei der irreversible Wärmefühler und die Eintauchen anzeigende Markierung in einem Stück ausgebildet sind.

17. Batterie nach einem der Ansprüche 1 bis 16, wobei die Batterie eine Sekundärbatterie ist.

18. Batterie nach Anspruch 17, wobei die Batterie eine Lithium-Ionen-Sekundärbatterie ist.

## Revendications

1. Batterie comprenant un détecteur de température irréversible capable d'indiquer une variation de température de deux niveaux ou plus.

2. Batterie selon la revendication 1, dans laquelle la batterie est une batterie secondaire.

3. Batterie selon la revendication 1, dans laquelle la variation de température dans le détecteur de température irréversible est indiquée par un changement de couleur du détecteur de température irréversible.

4. Batterie selon la revendication 1, dans laquelle le détecteur de température irréversible est un papier thermique, un crayon thermosensible, ou une manucure thermosensible.

5. Batterie selon la revendication 1, dans laquelle le détecteur de température irréversible a une variation d'indication à une température allant de 55 °C à 65 °C, et de 75 °C à 85 °C.

6. Batterie selon la revendication 1, dans laquelle le détecteur de température irréversible indique la variation de température de trois niveaux.

7. Batterie selon la revendication 6, dans laquelle le détecteur de température irréversible a une variation d'indication à une température allant de 55 °C à 65 °C, de 75 °C à 85 °C, et de 95 °C à 105 °C.

8. Batterie selon la revendication 1, dans laquelle le détecteur de température irréversible est formé en appliquant à un substrat une peinture sensible irréversible dans laquelle une couleur est modifiée selon la température mais la couleur modifiée ne revient pas à une couleur précédente.

9. Batterie selon la revendication 8, dans laquelle la peinture thermosensible change de couleur selon l'un quelconque parmi un changement de structure cristalline, un changement de pH, une décomposition thermique des composants de la peinture sensibles à la température, et un changement du nombre d'électrons entre un accepteur et un donneur d'électrons.

10. Batterie selon la revendication 8, dans laquelle la peinture thermosensible change de couleur à deux températures différentes ou plus.

11. Batterie selon la revendication 8, dans laquelle la peinture thermosensible a une teinte de couleur variant selon la température.

12. Batterie selon la revendication 8, dans laquelle le détecteur de température irréversible est formé en disposant deux peintures sensibles à la température ou plus différentes en parallèle.

13. Batterie selon la revendication 5, dans laquelle la peinture thermosensible est un mélange de deux peintures sensibles à la température ou plus, dans laquelle chaque peinture thermosensible a son propre point de changement de couleur différent de celui des autres.

14. Batterie selon la revendication 1, comprenant également une étiquette sensible à l'immersion en plus du détecteur de température irréversible.

15. Batterie selon la revendication 14, dans laquelle l'étiquette sensible à l'immersion est disposée à l'intérieur d'un moulage en plastique constituant la batterie.

16. Batterie selon la revendication 14, dans laquelle le détecteur de température irréversible et l'étiquette sensible à l'immersion sont formés d'un seul tenant.

17. Batterie selon l'une quelconque des revendications 1 à 16, dans laquelle la batterie est une batterie secondaire.

18. Batterie selon la revendication 17, dans laquelle la batterie secondaire est une batterie secondaire au lithium-ion.
